# EUROPEAN PATENT APPLICATION

(11) **EP 1 308 888 A1**
(43) Date of publication of application: **07.05.2003**
(21) Application number: 01830685.2
(22) Date of filing: 06.11.2001
(51) Int. Cl.: G06T 3/40

(54) **A method of processing digital images**

(71) Applicant: STMicroelectronics S.r.l., 20041 Agrate Brianza (Milano) (IT); STMicroelectronics Limited, Pinkhill, Edinburgh GB-EH12 7BF (GB)
(72) Inventor: Guarnera, Mirko, 93012 Gela (Caltanissetta) (IT); Mancuso, Massimo, 20051 Monza (Milano) (IT); Hurwitz, Jonathan, EH13 0 Edinburgh (GB); Smith, Stewart, EH10 A Edinburgh (GB); Findlater, Keith, EH10 6AQ Edinburgh (GB)
(74) Representative: Maggioni, Claudio

(57) **Abstract**

A method of processing digital images in devices for acquiring both individual images and image sequences, comprising the step of acquiring images in CFA (colour filter array) format and the step of reducing the resolution of the images acquired. In order to reduce computing time and energy consumption, the resolution-reduction step processes the images directly in CFA format.

## Description

The present invention relates to the acquisition and processing of images in digital format and, in particular, relates to a method of processing digital images in CFA format, which are usable advantageously in apparatus such as, for example, digital cameras intended for acquiring both individual photograms for photographic applications and moving images for video applications.

Digital still cameras or DSCs are currently among the most common devices used for acquiring digital images. The ever-increasing resolution of the sensors on the market and the availability of low-consumption digital-signal processors (DSPs) have led to the development of digital cameras which can achieve quality and resolution very similar to those offered by conventional cameras.

As well as being able to capture individual images ("still pictures"), the most recent digital cameras can also acquire video sequences ("motion pictures").

In order to produce a video sequence, it is necessary to acquire a large number of photograms taken at very short intervals (for example 15 photograms per second). The processed and compressed photograms are then encoded into the most common digital video formats (for example, MPEG-4).

In devices which can acquire both individual images and video sequences, there are two conflicting requirements. For photographic applications, high resolution and a large processing capacity are required, even at the expense of acquisition speed and memory occupation. In contrast, for video applications, a fast acquisition speed and optimization of memory resources are required, at the expense of resolution.

The same remarks are applicable to future multimedia communication terminals such as, for example, third-generation mobile telephones or PDA palmtop computers (portable digital assistants); these should be able to acquire both individual images and video sequences.

A digital image is constituted by a matrix of elements or pixels; each pixel corresponds to a basic fragment of the image and is represented by one or more digital values, each associated with a different optical component.

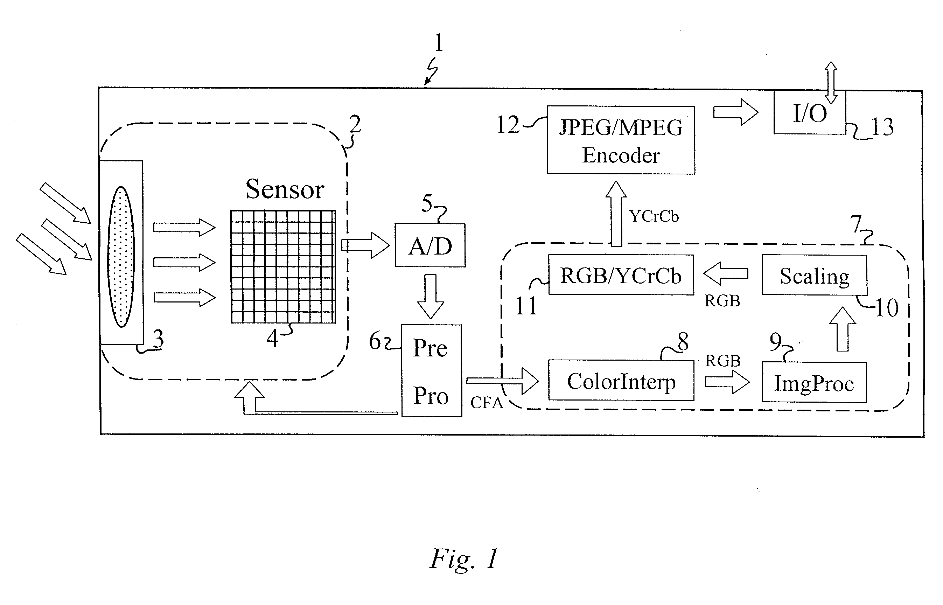

With reference to Figure 1, a digital camera 1 for photographic and video applications includes an acquisition block 2 constituted by a lens and diaphragm 3 and by a sensor 4 onto which the lens focuses an image representative of a real scene.

Irrespective of whether the sensor 4 is of the CCD (charge-coupled device) or CMOS type, it is an integrated circuit comprising a matrix of photosensitive cells each of which generates a voltage proportional to the exposure to which it is subjected.

The voltage generated by each photosensitive cell is translated into a digital value by an A/D converter 5. This value may be represented by 8, 10 or 12 bits, according to the dynamics of the camera.

In a typical sensor, a single photosensitive cell is associated with each pixel. The sensor is covered by an optical filter constituted by a matrix of filter elements each of which is associated with a photosensitive cell. Each filter element transmits to the photosensitive cell associated therewith the luminous radiation corresponding to the wavelength solely of red light, solely of green light, or solely of blue light (absorbing a minimal portion thereof), so that only one component, that is, the red component, the green component, or the blue component, is detected for each pixel.

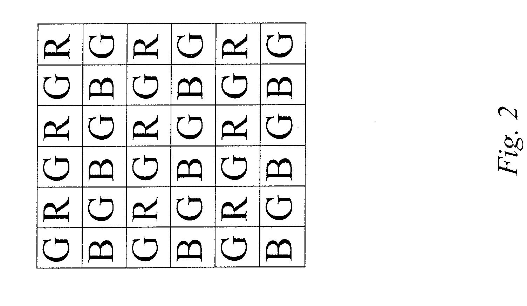

The type of filter used varies according to the manufacturer; the most commonly used is known as a Bayer filter. In this filter, the arrangement of the filter elements, which is known as the Bayer pattern, is determined by the basic matrix shown in Figure 2.

With a filter of this type, the green component (G) is detected by half of the pixels of the sensor, with a chessboard-like arrangement; the other two components are detected by the remaining pixels which are arranged in alternating rows.

The image output by the analog/digital converter 5 is an incomplete digital image because it is constituted by a single component (R, G or B) per pixel. The format of this image is conventionally referred to as a CFA (colour filter array).

This image is sent to the input of a pre-processing unit PrePro 6; this unit is active prior to and during the entire acquisition stage, interacts with the acquisition block 2, and estimates, from the incomplete image, various parameters which are useful for performing automatic control functions, that is: auto-focus, auto-exposure, correction of sensor defects, and white balancing functions.

The incomplete CFA digital image is then sent to a unit 7 known as the IGP (image generation pipeline) which is composed of several blocks. Starting with the CFA image, a block 8, known as ColorInterp, generates, by means of an interpolation process, a complete RGB digital image in which a set of three components corresponding to the three R, G and B components is associated with each pixel. This conversion may be considered as a transition from a representation of the image in a single plane (Bayer) to a representation in three planes (R, G, B). This image is then processed by the ImgProc block 9 which is provided for improving quality. Several functions are performed in this block 9, that is: exposure correction, filtering of the noise introduced by the sensor 4, application of special effects, and other functions the number and type of which are variable in general from one manufacturer to another.

The complete and improved RGB image is passed to the block 10, which is known as the scaling block. This block reduces the resolution of the image, if required. An application which requires the maximum available resolution equal to that of the sensor (for example, a high-resolution photograph) does not require any reduction in resolution. If, however, for example, the resolution is to be halved, for example, for a film, the scaling block eliminates three quarters of the pixels.

After scaling, the RGB image is converted, by the block 11, into the corresponding YCbCr image in which each pixel is represented by a luminance component Y and by two chrominance components Cb and Cr. This is the last step performed in the IGP.

The next block is a compression/encoding block 12: generally JPEG is used for individual images and MPEG-4 for video sequences.

The resolution necessary for video applications is lower than that required for photographic applications but, according to the prior art, the sensor and the IGP nevertheless work at maximum resolution, even for acquiring video sequences.

This leads to wasted computation which translates into an enormous consumption of time and energy and unnecessary occupation of memory.

The main object of the invention is to prevent or to limit this problem of the prior art. This object is achieved, according to the invention, by a method which provides for the resolution of the photograms to be reduced directly in CFA format.

The invention will be understood further from the following detailed description of two embodiments of this method, given with reference to the appended drawings, in which:
Figure 1 is a block diagram of a digital camera according to the prior art,
Figure 2 shows the matrix corresponding to a BAYER sensor filter,
Figure 3 is a block diagram of a first digital camera which uses the method according to the invention, and
Figure 4 is a block diagram of a second digital camera which uses the method according to the invention.

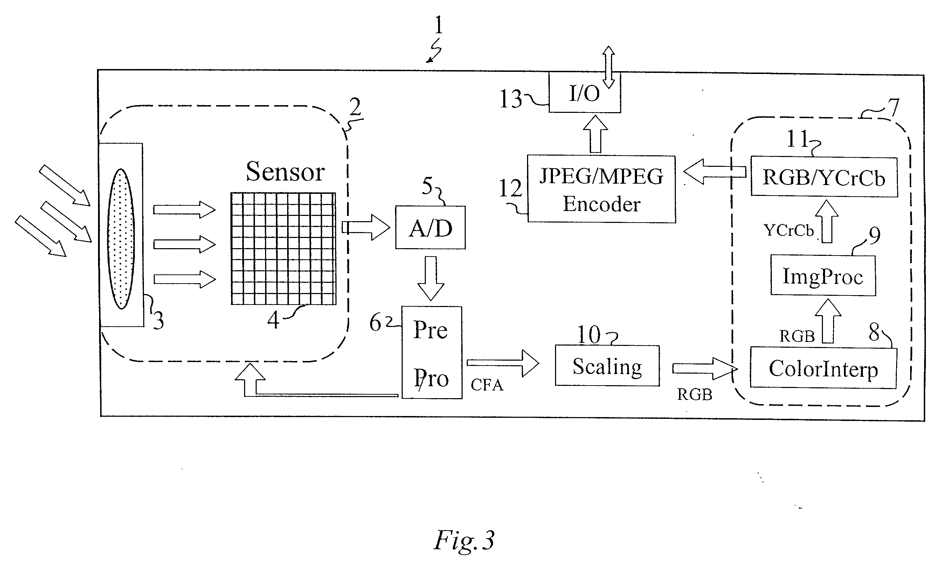

As can be seen in Figure 3, in which blocks identical or equivalent to those of Figure 1 are indicated by the same reference numerals or symbols, in the digital camera 1 which uses the method according to the invention, the scaling algorithm, which is provided for reducing resolution, acts directly on the incomplete CFA image, prior to the interpolation process which reconstructs the three R,G,B planes.

The scaling algorithm 10 performs two operations: the image is processed by an anti-aliasing digital lowpass filter and is under-sampled in the spatial domain. The under-sampling produces an image which is scaled by a predetermined factor in each dimension.

For example, MxN scaling reduces one dimension by a factor M and the other by a factor N. The under-sampling process consists in breaking the image down into adjacent and non-overlapping blocks of pixels with dimensions of MxN and in replacing each block with a single pixel the intensity of which is obtained by averaging the intensities of the MxN pixels making up the block.

According to the prior art, the resolution-reduction algorithms operate on RGB images, that is, on images which are composed of three distinct and complete planes. Each component is processed separately, since these algorithms are applied separately to the three images corresponding to the three R,G,B planes.

In the present invention, however, the resolution-reduction algorithm operates on an incomplete CFA image in which the pixels of the R,G,B planes form part of a single plane and are interlaced in accordance with the Bayer-pattern matrix.

In practice, this algorithm can be implemented by a person skilled in the art by adapting known scaling algorithms in a manner such that they operate directly on the Bayer pattern and can act selectively on the pixels associated with different colours.

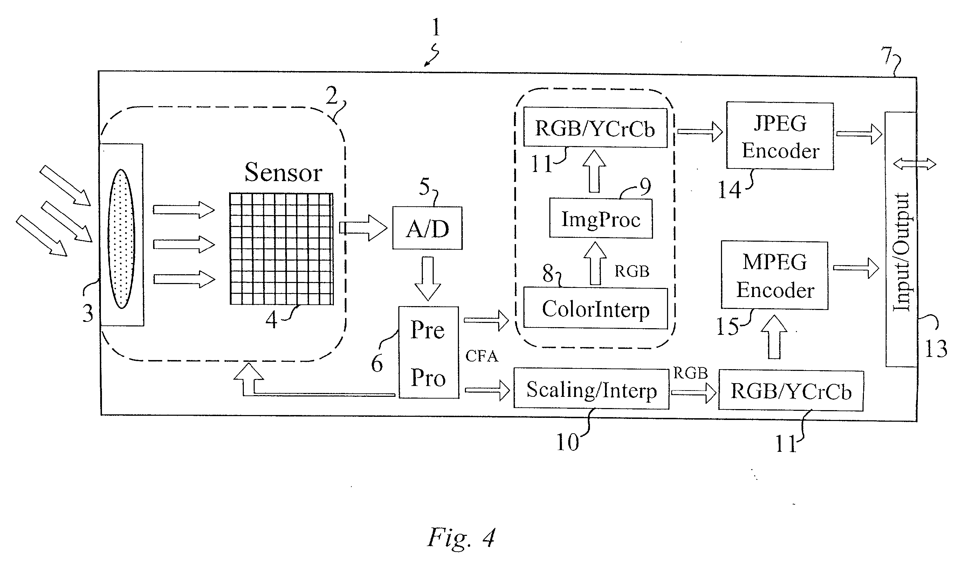

With reference to Figure 4, in which blocks identical or equivalent to those of Figure 1 are indicated by the same reference numerals or symbols, another digital camera which uses the method according to the invention enables images for photographic applications to be processed in a different manner from video-sequence photograms.

The maximum-resolution photographic images output by the PrePro block 6 are subjected to processing by the known technique and are sent to a JPEG encoder 14.

The images making up video sequences are processed by the block 10 which combines both scaling and colour interpolation. It is in fact possible to form a block which performs anti-aliasing filtering, under-sampling and interpolation simultaneously. It is in fact known that the two operations (scaling and interpolation) are both determined by a convolution matrix. A single convolution matrix can be associated with the two blocks in series; the entire process is thus performed in a single operation.

The RGB signal output by the block 10 is converted directly into a YCrCb signal by the block 11 and is then sent to the MPEG encoding block 15.

After interpolation, the video-sequence images thus undergo no further preparation or processing; in contrast with what happens with photographic images, any improvements introduced at this point would represent an unnecessary waste of computation since they would be almost completely cancelled out by the losses in quality introduced by the MPEG encoding.

The invention described reduces computing cost, energy consumption, and memory occupation during the acquisition of video sequences with devices which can also acquire high-resolution individual photograms.

With reference to a digital camera according to the prior art as shown in Figure 1, with a VGA sensor 4 (640x480) and to obtain a video sequence encoded in accordance with the MPEG-4 standard, the scaling algorithm implemented by the block 10 would have to reduce VGA images to a QCIF format (176x144).

Upon the assumption that an 8-bit A/D converter 5 is used, the VGA Bayer image would have a size of 330 kbytes. Since an MPEG-4 sequence requires 15 photograms per second, the input of the ColorInterp block 8 would receive a 4.5 Mbyte/s data stream in order to generate an output stream of 13.5 Mbyte/s. This enormous quantity of data would be processed by the ImgProc block 9 and would be reduced, after scaling, to a stream of 1.14 Mbyte/s.

According to the present invention, in a digital camera such as that shown in Figure 3, the original 330 kbyte image acquired by the same VGA sensor 4 in CFA format is immediately reduced to a 25 kbyte CFA image in QCIF format by the scaling block 10.

A 380 kbyte stream produced by 15 images per second in this format is present at the input of the interpolation block 8. The interpolation triples the size of the data; the ImgProc block 9 operates on a stream of only 1.14 Mbyte/s.

According to the present invention, in this example, the interpolation block and the ImgProc block process a quantity of data the size of which is one order of magnitude less than that processed according to the prior art.

The example calculation given assumed the use of a VGA sensor (307200 pixels); the advantages of the invention, in terms of computational saving are even clearer when it is borne in mind that sensors can currently achieve a resolution of 6-7 million pixels.

## Claims

1. A method of processing digital images in CFA (colour filter array) format, each represented by a matrix of pixels, that is, of basic fragments of the image represented by one or more digital values each associated with a different optical component, comprising the step of reducing the resolution of the images by means of an under-sampling of the pixels, **characterized in that** the reduction in resolution is performed directly on the digital images in CFA format.

2. A method according to Claim 1 in which the digital images in CFA format are acquired by means of optical sensors in which the photosensitive elements are associated with filter elements arranged in accordance with the Bayer pattern (Figure 2).

3. A method according to any one of the preceding claims in which the resolution-reduction step includes a step for anti-aliasing digital filtering of the CFA images.

4. A method according to any one of the preceding claims in which, after the resolution-reduction step, the CFA images are subjected to an interpolation step.

5. A method according to Claim 4 in which the interpolation step produces a complete image in R,G,B, format.

6. A method according to Claim 4 in which the interpolation step produces a complete image in Y,Cr,Cb format.

7. A method according to any one of Claims 4, 5 and 6 in which the step of reducing the resolution of the CFA image and the interpolation step are performed by a single algorithm based on the product of convolution of the CFA image with convolution matrices which simultaneously perform both of the above-mentioned functions.

8. A method of operation of apparatus for taking photographic images and video-sequence images by means of the same sensor, in which the video-sequence images are processed by a method according to any one of the preceding claims, and in which the photographic images are processed by the following steps: acquisition in CFA format, processing and interpolation of the CFA images immediately after the pre-processing step in order to perform all of any subsequent processing operations on interpolated images.
